# EUROPEAN PATENT APPLICATION

(11) **EP 1 395 002 A1**
(43) Date of publication of application: **03.03.2004**
(21) Application number: 03014965.2
(22) Date of filing: 01.07.2003
(51) Int. Cl.: H04L 12/56

(54) **Apparatus for performing wireless communication and wireless communication control method applied to the apparatus**

(30) Priority: 30.08.2002 JP 2002253068
(71) Applicant: Kabushiki Kaisha Toshiba, Tokyo (JP)
(72) Inventor: Honda, Yoshinori, c/o Toshiba Corporation, Minato-ku, Tokyo 105-8001 (JP); Taki, Makoto, c/o Toshiba Corporation, Minato-ku, Tokyo 105-8001 (JP)
(74) Representative: Henkel, Feiler, Hänzel

(57) **Abstract**

An apparatus performs a wireless communication by using of a wireless communication device (101). The apparatus includes, a location selecting unit (201, S102) for selecting one from among a plurality of locations that are predetermined to perform the wireless communication, and an operating environment setting unit (201, S104) for setting an operating environment for the wireless communication in a mode in which the wireless communication device (101) does not respond to a device discovery request transmitted from a remote device, based on the selected location.

## Description

The present invention relates to an apparatus for performing wireless communication and a wireless communication control method that is applied to the apparatus. More specifically, the invention relates to an apparatus having a device discovery function of discovering a new device that is present within a wireless communication area of the apparatus and a wireless communication control method that is applied to the apparatus.

A new wireless communication system for wirelessly connecting electronic devices has recently been developed. Bluetooth™ is known as this type of wireless communication system. Bluetooth™ is a standard for a short-range wireless communication system that is targeted for a connection between various electronic devices as well as computers.

A device discovery function is defined in Bluetooth™ to discover a new device capable of wireless communication. Using this function, an electronic device that is present within a wireless communication area of another electronic device can be discovered.

The device discovery function is accomplished by the procedures that an electronic device transmits a device discovery request (inquiry) by means of a radio signal and another electronic device receives and responds to the request.

If, however, a setting for responding to a device discovery request at all times is adopted, it becomes difficult to retain adequate security. This is because the presence of an electronic device is recognized by any number of electronic devices. When an electronic device is used particularly in the mobile environment such as streets and stations, there is a danger that unauthorized access will be performed against the electronic device.

On the contrary, when an electronic device is used at home, it is desirable to adopt a setting for responding to a device discovery request because a connectivity of the device to another electronic device at home has higher priority than security.

As is evident from the above, a desirable operating environment for wireless communication often varies from scene to scene or location to location for using the wireless communication.

An object of the present invention is to provide an apparatus and a wireless communication control method capable of changing the setting of a security level of a wireless communication in accordance with a location for using the wireless communication.

According to an embodiment of the present invention, there is provided an apparatus for performing a wireless communication by using of a wireless communication device, comprising: means for selecting one from among a plurality of locations that are predetermined to perform the wireless communication; and means for setting an operating environment for the wireless communication in a mode in which the wireless communication device does not respond to a device discovery request transmitted from a remote device, based on the selected location.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an external view of a computer according to an embodiment of the present invention;
FIG. 2 is a block diagram showing a configuration of the computer according to the embodiment of the present invention;
FIG. 3 is a block diagram of software components for controlling a wireless communication device in the computer according to the embodiment of the present invention;
FIG. 4 is a table showing contents of each mode setting information item used for controlling the wireless communication device in the computer according to the embodiment of the present invention;
FIG. 5 is a diagram illustrating a wireless communication operation in each of a discoverable mode and a non-discoverable mode used in the computer according to the embodiment of the present invention;
FIG. 6 is a diagram illustrating a wireless communication operation in each of a connectable mode and a non-connectable mode used in the computer according to the embodiment of the present invention;
FIG. 7 is a diagram illustrating a wireless communication operation in each of a pairable mode and a non-pairable mode used in the computer according to the embodiment of the present invention;
FIG. 8 is a diagram illustrating a pairing process used in the computer according to the embodiment of the present invention;
FIG. 9 is a flowchart showing a mode switching process executed by the computer according to the embodiment of the present invention;
FIG. 10 is an illustration showing an example of an operation screen for wireless communication control used in the computer according to the embodiment of the present invention;
FIG. 11 is an illustration showing an example of a mode property sheet screen used in the computer according to the embodiment of the present invention;
FIG. 12 is an illustration showing an example of an automatic power-on select property sheet used in the computer according to the embodiment of the present invention;
FIG. 13 is a table showing a structure of an automatic selection list used in the computer according to the embodiment of the present invention;
FIG. 14 is a flowchart showing a process of registering a remote device in the automatic selection list shown in FIG. 13; and
FIG. 15 is a flowchart showing a process of automatically selecting a user mode by the computer according to the embodiment of the present invention.

An embodiment of the present invention will now be described with reference to the accompanying drawings.

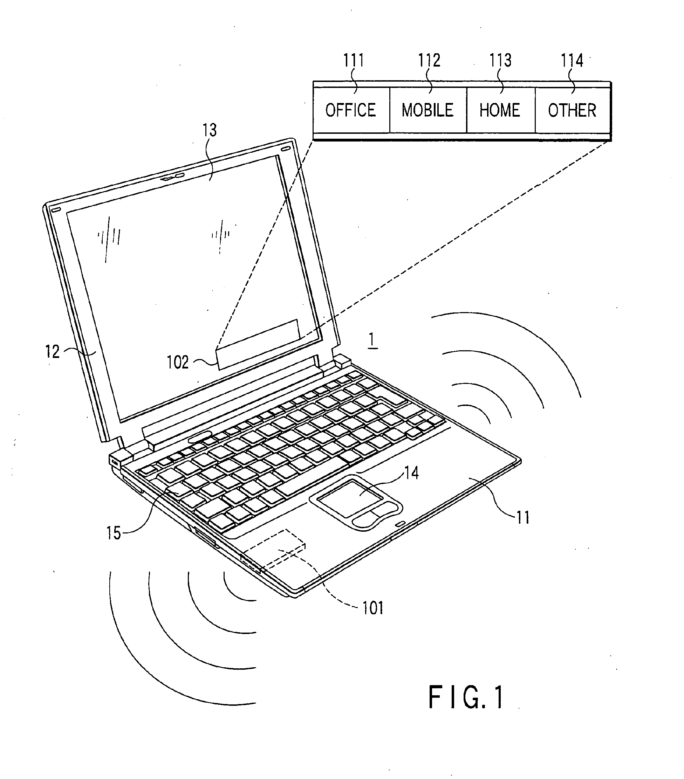

FIG. 1 shows an example of a configuration of an electronic apparatus according to one embodiment of the present invention. This apparatus is an information processing apparatus having a wireless communication function and it is implemented as, for example, a notebook type portable personal computer.

FIG. 1 is a front view of a computer 1 according to the embodiment of the present invention, a display unit of which is opened. The computer 1 includes a computer main body 11 and a display unit 12.
The display unit 12 is attached to the computer main body 11 such that it can be turned between a closed position in which the unit 12 covers the top face of the main body 11 and an opened position in which the top face of the main body 11 is exposed. The display unit 12 incorporates an LCD (liquid crystal display) 13 that forms a display panel. The LCD 13 is located in almost the central part of the display unit 12.

The LCD 13 displays a user mode bar 102 on its display screen. The user mode bar 102 is a GUI (graphical user interface) for changing an operating environment for wireless communication of the computer 1 in accordance with a location for the wireless communication. The GUI is used to cause a user to select a location for wireless communication.

In the present embodiment, "office," "mobile," "home" and "others" are previously defined as locations for performing wireless communication. These "office," "mobile," "home" and "others" are used as user modes for determining a wireless communication environment of the computer 1.

In the computer 1, a default value of mode setting information for determining an operating environment for wireless communication is registered as template information for each of the locations "office," "mobile," "home" and "others." The mode setting information includes a plurality of operation setting items for determining an operating environment for security levels of the wireless communication.
An operating environment for wireless communication in each user mode or an operating environment for wireless communication in each location for using the computer 1 depends upon a combination of default values of the operation setting items included in the mode setting information that corresponds to the location.

The user mode bar 102 includes four button icons 111, 112, 113 and 114 which correspond to an "office" mode, a "mobile" mode, a "home" mode and an "others" mode, respectively.

If a user clicks any one of the button icons 111, 112, 113 and 114 on the user mode bar 102 using a pointing device 14, he or she can select a location for using the computer or a user mode from among the user modes "office," "mobile," "home" and "others." The user mode of default corresponds to the "others" mode.

The computer main body 11 has a thin box-type housing. A keyboard 15 as well as the above-described pointing device 14 is arranged on the top face of the housing. Moreover, the computer main body 11 includes a wireless communication device 101.

The wireless communication device 101 is a device that performs wireless communication. The device is so designed that the wireless communication is performed in accordance with the short-range wireless communication standard such as Bluetooth™. The wireless communication of the wireless communication device 101 is controlled by wireless communication control utilities that are programs executed in the computer 1.

The wireless communication control utilities include: 1) a function of displaying the user mode bar 102 on the display screen, 2) a function of selecting a location (user mode) in accordance with the user's operation of the user mode bar 102, and 3) a function of changing the setting for an operating environment of the wireless communication device 101 in accordance with the selected location ("office," "mobile," "home," or "others").

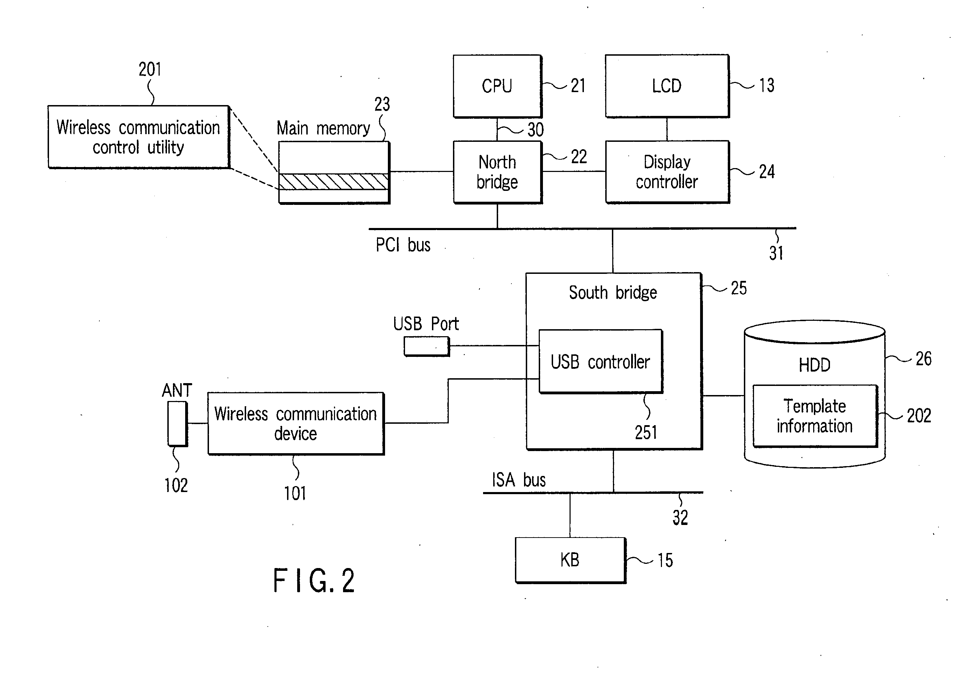

FIG. 2 shows a system configuration of the computer 1. The computer 1 includes a CPU 21, a north bridge 22, a main memory 23, a display controller 24, a south bridge 25, a hard disk drive (HDD) 26 and a wireless communication device 101.

The CPU 21 is a processor configured to control the operation of the computer 1. The CPU 21 executes an operating system (OS) that is loaded into the main memory 23 from the hard disk drive 26 and various application programs. A wireless communication control utility 201 is loaded into the main memory 23 from the hard disk drive 26 and executed by the CPU 21.

The hard disk drive 26 stores template information 202 managed by the wireless communication control utility 201. The template information 202 is made up of a plurality of mode setting information items that correspond to a plurality of user modes ("office," "mobile," "home" and "others" modes).

The wireless communication control utility 201 manages the template information 202 as a database. The wireless communication control utility 201 performs: 1) a process of changing the content of each mode setting information item, 2) a process of saving the changed content, and 3) a process of returning the changed content to default value.

The north bridge 22 is a bridge device that connects a local bus 30 of the CPU 21 and a PCI bus 31 bidirectionally. The display controller 24 controls the LCD 13 that is used as a display monitor of the computer 1. The south bridge 25 is a bridge device that connects the PCI bus 31 and ISA bus 32 bidirectionally. The foregoing keyboard (KB) 15 is connected to the ISA bus 32.

The south bridge 25 includes a USB (universal serial bus) controller 251. The wireless communication device 101 transmits and receives a radio signal via an antenna (ANT) 102. The wireless communication device 101 is connected to the USB controller 251 and its operation is controlled in response to a command supplied from the CPU 21 through the USB controller 251.

The wireless communication device 101 includes an RF (radio frequency) unit and a baseband unit. The RF unit up-converts an intermediate frequency to an RF frequency and down-converts an RF frequency to an intermediate frequency. The baseband unit modulates send data and demodulates receive data in accordance with a given wireless communication protocol.

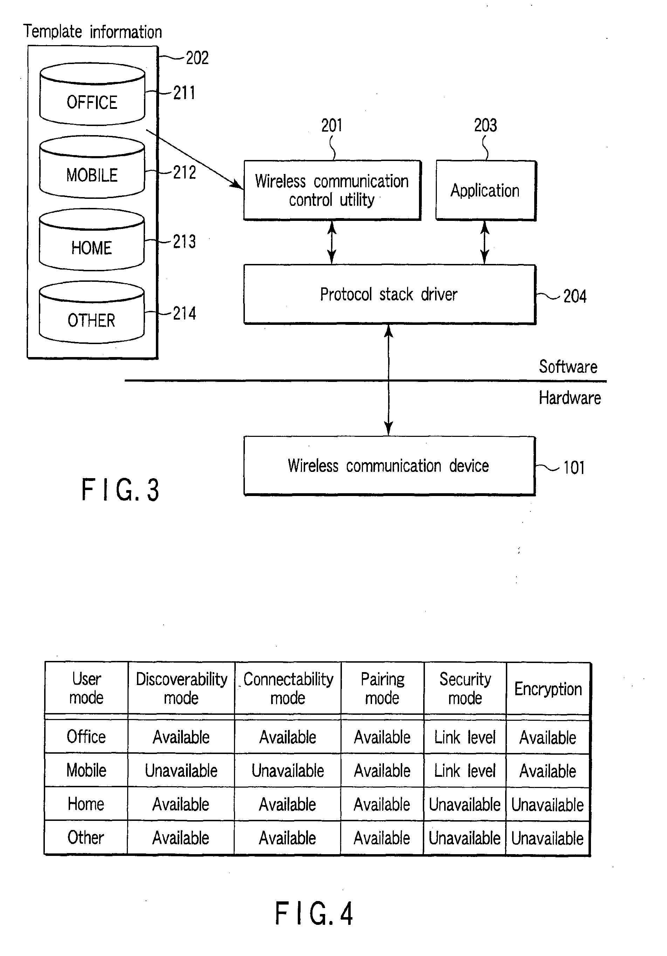

Software components for controlling the wireless communication of the wireless communication device 101 will now be described with reference to FIG. 3.

Software for wireless communication is roughly divided into a wireless communication utility 201, a protocol stack driver 204 and an application program 203.

The protocol stack driver 204 is a program corresponding to the protocol stack of Bluetooth™. The wireless communication control utility 201 controls the setting of an operation mode of the wireless communication device 101 through the protocol stack driver 204. The application programs 203 is a program for data communications with another device using a wireless communication function of the wireless communication device 101. The application program 203 receives/sends data from/to the wireless communication device 101 via the protocol stack driver 204.

The template information 202 managed by the wireless communication control utility 201 includes office template information 211, mobile template information 212, home template information 213, and others template information 214.

The office template information 211, mobile template information 212, home template information 213, and others template information 214 are mode setting information items corresponding to their respective "office," "mobile," "home" and "others" modes. The wireless communication control utility 201 sets an operating environment of the wireless communication device 101 selectively using the mode setting information items.

The contents of each mode setting information item will now be described with reference to FIG. 4.

As shown in FIG. 4, each mode setting information item includes five setting values corresponding to five operating environment setting items, a "discoverability mode," a "connectability mode," a "pairing mode," a "security mode" and "encryption" in order to determine a security level of wireless communication in a location for the wireless communication. The meaning of each operating environment setting item will now be described.

### (1) Discoverability mode

The "discoverability mode" is an operating environment setting item for specifying whether the computer 1 (specifically the wireless communication device 101) should respond to a discovery request sent from another device having a wireless communication function. Hereinafter the computer 1 will be referred to as a local device and another device having a wireless communication function will be referred to as a remote device.

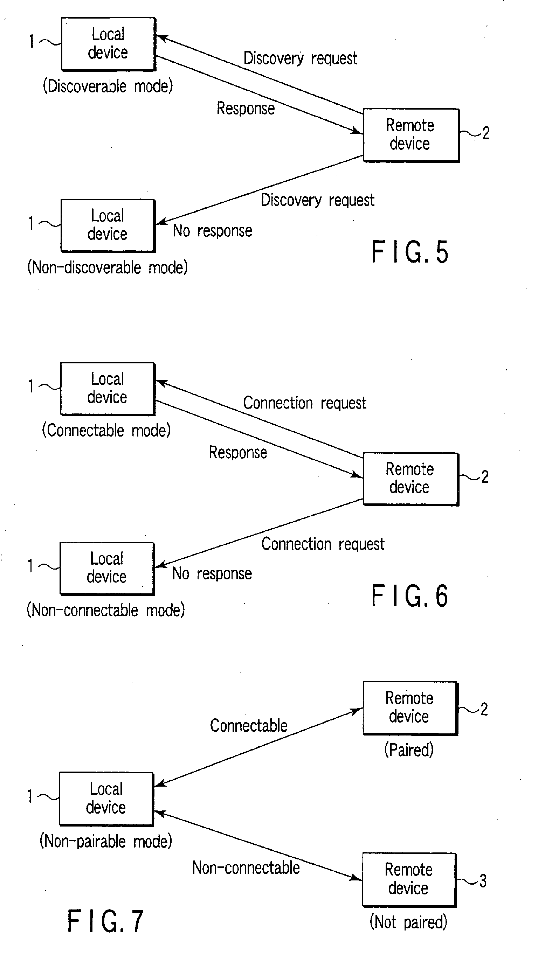

The "discoverability mode" is used as an operating environment setting item for allowing the local device to be detected (discovered) by the remote device or for inhibiting the local device from being detected (discovered) by the remote device. With a setting value of the operating environment setting item corresponding to the "discoverability mode", the local device 1 is set in one of a mode (discoverable mode) for responding to a discovery request and a mode (non-discoverable mode) for not responding to the discovery request. The operation of the local device 1 in each of the discoverable and non-discoverable modes is shown in FIG. 5.

The remote device 2 broadcasts a discovery request by means of a radio signal in order to discover a new device that is present within the wireless communication area of the remote device. This operation is called an inquiry in the standard of Bluetooth™. In the Bluetooth™ standard, an inquiry packet (IQ packet) is broadcast as a discovery request.

When the local device 1 is in the discoverable mode, the local device 1 responds to the discovery request. In other words, the local device 1 returns a response packet to the remote device 2 upon receipt of the discovery request from the remote device 2. The operation responding to the discovery request is called inquiry scan in the Bluetooth™ standard. In the Bluetooth™ standard, a response packet including information such as the device name, device address and clock of the local device 1 is returned to the remote device 2 from the local device 1. This response packet allows the remote device 2 to discover (recognize) the local device 1.

When the local device 1 is in the non-discoverable mode, the local device 1 does not respond to the discovery request. Thus, the local device 1 can be hidden from all the remote devices other than a remote device that has already recognized information such as the device address of the local device 1.

As described above, the discoverability mode is automatically switched between the discoverable mode and the non-discoverable mode in accordance with a user's selected user mode (location for wireless communication). Therefore, the operating environment for wireless communication can easily be set at a security level that conforms to the selected location.

In both the discoverable and non-discoverable modes, the local device 1 is allowed to transmit a discovery request.

### (2) Connectability mode

The "connectability mode" is an operating environment setting item for specifying whether the local device 1 should respond to a connection request that is transmitted from the remote device by means of a radio signal. With a setting value of the operating environment setting item corresponding to the "connectability mode", the local device 1 is set in one of a mode (connectable mode) that responds to the connect request and a mode (non-connectable mode) that does not respond thereto. The operation of the local device 1 in each of the connectable and non-connectable modes is shown in FIG. 6.

If the remote device 2 has already recognized the device address of the local device 1, the remote device 2 can transmit a connect request packet to the local device 1. This operation is called paging in the Bluetooth™ standard.

When the local device 1 is in the connectable mode, the local device 1 responds to the connect request. In other words, the local device 1 returns a response packet to the remote device 2 upon receipt of the connection request from the remote device 2. The operation responding to the connect request is called page scan in the Bluetooth™ standard. With this operation, a link is established between the local device 1 and the remote device 2.

When the local device 1 is in the non-connectable mode, the local device 1 does not respond to the connect request. Thus, the local device 1 can reject the connect request from the remote device 2.

In both the connectable and non-connectable modes, the local device 1 is allowed to transmit a connect request.

### (3) "Pairing Mode"

The "pairing mode" is an operating environment setting item for specifying whether to allow an authentication process to be performed between the local device 1 and the remote device 2. With a setting value of the operating environment setting item corresponding to the "pairing mode", the local device 1 is set in one of a mode (pairable mode) that allows the authentication process (pairing) to be performed and a mode (non-pairable mode) that inhibits the authentication process (pairing) from being performed.

The authentication process (pairing) is a process for confirming that both the local device 1 and remote device 2 are supplied with the same password, the process may be required to establish a connection between these devices 1 and 2.

In the pairing process, the local device 1 and remote device 2 exchange their device addresses and passwords with each other to determine whether these devices are supplied with the same password. When the pairing succeeds, the local device 1 and remote device 2 keep the same secret keys (referred to as link keys hereinafter). The pairing between the devices 1 and 2 is therefore completed. The devices 1 and 2 that have succeeded in pairing can authenticate each other only by exchanging the link keys.

When the local device 1 is in the non-pairable mode, the local device 1 is inhibited from performing the above pairing process. The pairing process is required at the time of connection between the devices that the pairing has not completed. When the local device 1 is in the non-pairable mode, as shown in FIG. 7, the local device 1 can be connected to the remote device 2 that has already completed the pairing with the local device 1 and not a remote device 3 that has not yet performed any pairing.

### (4) "Security Mode"

The "security mode" is an operating environment setting item for specifying whether the above-described authentication process (pairing) is necessary to be performed at the time of connection between the devices. With a setting value of the operating environment setting item corresponding to the "security mode", the local device 1 is set in one of a mode (security mode = link level) in which the authentication process needs to be performed at the time of connection with the remote device and a mode (security mode = unavailable) in which the authentication process needs not to be performed.

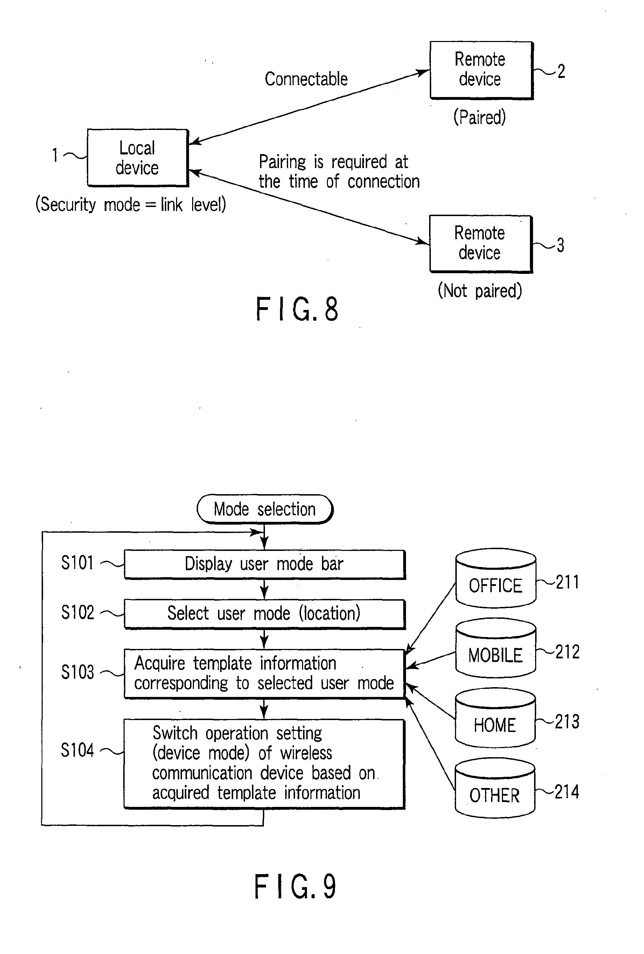

In the former mode (security mode = link level), the local device 1 performs the authentication process by exchanging the link keys when the local device 1 is connected to the remote device 2 that has already completed the pairing with the local device 1 as shown in FIG. 8. On the other hand, when the local device 1 is connected to the remote device 3 that has not yet performed any pairing, it needs to perform the authentication process (pairing) with the remote device 3.

### (5) "Encryption"

"Encryption" is an operating environment setting item for specifying whether to encrypt data that is transferred between a local device and a remote device. When the "Encryption" is available, the data encryption is performed using a secret key (link key). It is thus possible to specify that data should be encrypted only when the security mode is equal to the link level.

The setting values of defaults in the operating environment setting items in the "office," "mobile," "home" and "others" modes are shown in FIG. 4. More specifically, when the local device is used at home (when the local device is in the "home" mode), an operating environment (discoverability mode = discoverable mode, connectability mode = connectable mode, pairing mode = pairable mode, security mode = unavailable, encryption = unavailable) in which connectivity between the local and remote devices has higher priority than security is selected. When the local device is used outside (when the local device is in the "mobile" mode), an operating environment (discoverability mode = non-discoverable mode, connectability mode = non-connectable mode, pairing mode = non-pairable mode, security mode = link level, encryption = available) in which security has higher priority is selected.

By defining the setting values of defaults in the operating environment setting items in each location for wireless communication as described above, an operating environment for wireless communication can easily set at a security level that conforms to the location selected by a user.

A user mode switching process that is executed by the wireless communication control utility 201 will now be described with reference to the flowchart shown in FIG. 9.

The user mode switching process is a process for changing the setting values of the foregoing operating environment setting items in accordance with a user's selected location for wireless communication (user mode).

First, the wireless communication control utility 201 displays the user mode bar 102 on the display screen of the LCD 13 (step S101). Then, the utility 201 selects a user mode (location for performing wireless communication) to be used from among the "office," "mobile," "home" and "others" modes when a user clicks a button icon (step S102).

After that, the utility 201 acquires template information, which corresponds to the selected user mode, from among the office template information 211, mobile template information 212, home template information 213 and others template information 214 (step S103). The utility 201 sets the setting values of the operating environment setting items described in the acquired template information in the wireless communication device 101 through the protocol stack driver 204 and thus switches the setting of the operating environment of the wireless communication device 101 (device mode) to the contents corresponding to the user mode selected in step S102 from those corresponding to the previously selected user mode (step S104).

Consequently, the user can easily set the operating environment for wireless communication at a security level that conforms to a location for the wireless communication only by designating the location by means of the user mode bar 102.

The user can also change the contents of template information of each user mode when the need arises. In this case, the operating environment of the wireless communication device 101 can be set on the basis of the changed template information.

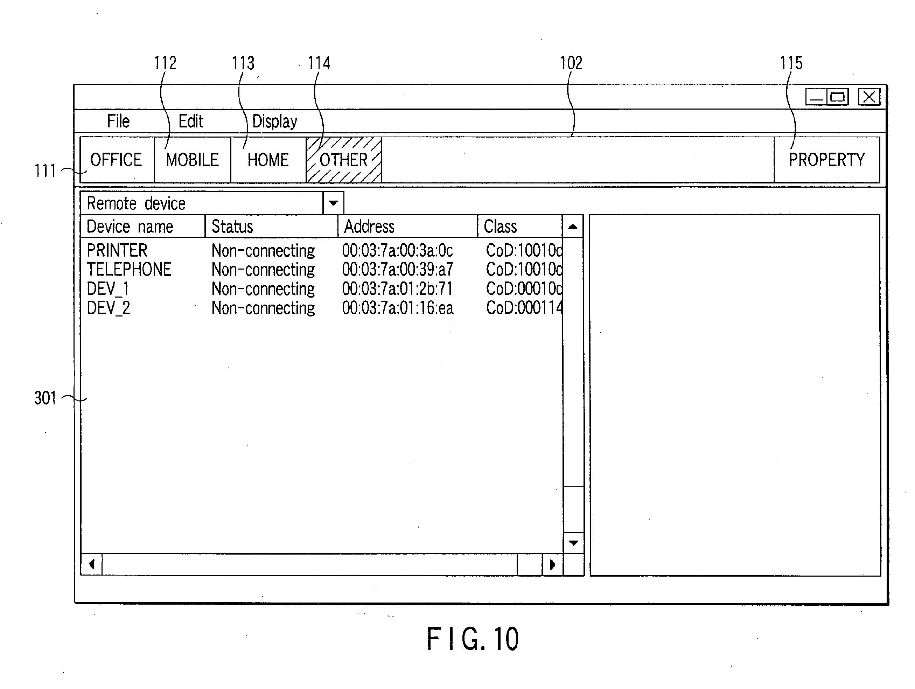

FIG. 10 shows an example of an operation screen displayed on the LCD 13 by the wireless communication control utility 201 when the utility 201 is started. The operation screen is a user interface for receiving a request for control of the wireless communication device 101 from a user. As shown in FIG. 10, the operation screen displays a user mode bar 102 and a device list view 301. It can display only the user mode bar 102, as has been described above with reference to FIG. 1.

The device list view 301 is a window for displaying a list of remote devices that have already been discovered. It displays information such as a device name, a status and a device address of each of the remote devices. The status is information indicating whether the remote device is currently connected to the local device (the wireless communication device 101).

The user mode bar 102 on the operation screen has a "property" button icon 115 in addition to the four button icons 111, 112, 113 and 114 corresponding to the "office," "mobile," "home" and "others" modes. Of the four button icons 111 to 114, the button icon corresponding to the currently-selected user mode is highlighted. The "property" button icon 115 is used to call a user mode property screen for editing the contents of mode setting information of each user mode.

The user mode property screen includes two property sheets of a "mode" property sheet for changing the contents of each user mode and an "automatic power-on select" property sheet for making a setting for automatically selecting a user mode.

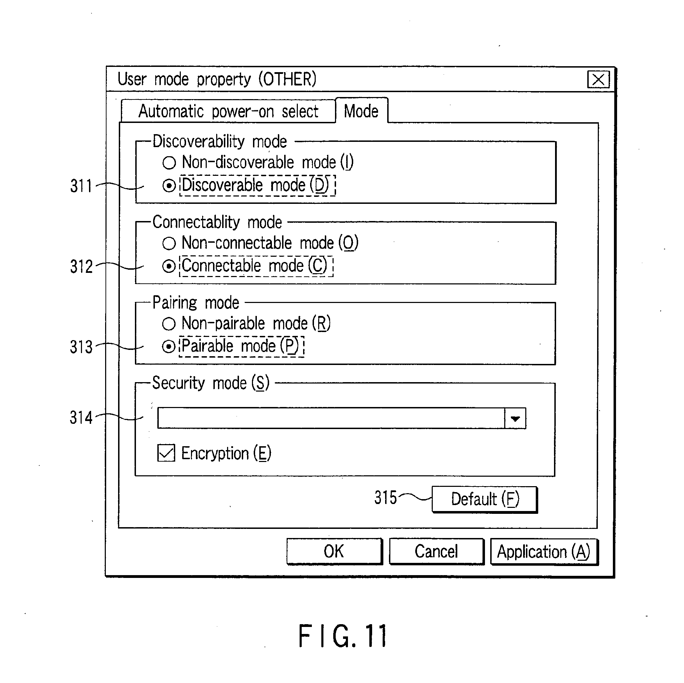

FIG. 11 shows an example of the "mode" property sheet.

If the "property" button icon 115 is clicked when the "others" mode is selected, the "mode" property sheet is displayed as shown in FIG. 11. This "mode" property sheet is a screen for changing the contents of mode setting information regarding the "others" mode.

As shown in FIG. 11, the "mode" property sheet includes a "discoverability mode" property setting section 311, a "connectability mode" property setting section 312, a "pairing mode" property setting section 313 and a "security mode" and "encryption" property setting section 314.

The "discoverability mode" property setting section 311 is a user interface used for causing a user to designate an operating environment for the "discoverability mode" and includes a radio button for causing the user to designate one of the "discoverable mode" and "non-discoverable mode."

The "connectability mode" property setting section 312 is a user interface used for causing a user to designate an operating environment for the "connectability mode" and includes a radio button for causing the user to designate one of the "connectable mode" and "non-connectable mode."

The "pairing mode" property setting section 313 is a user interface used for causing a user to designate an operating environment for the "pairing mode" and includes a radio button for causing the user to designate one of the "pairable mode" and "non-pairable mode."

The "security mode" and "encryption" property setting section 314 is a user interface used for causing a user to designate an operating environment for the "security mode" and "encryption." The section 314 includes a pull-down menu for designating an operating environment for the "security mode" and a check box for designating the presence and absence of "encryption."

The "mode" property sheet also includes a "default" button 315. When a user selects the "default" button 315, the setting values of the operating environment setting items of a corresponding user mode are returned to the default values.

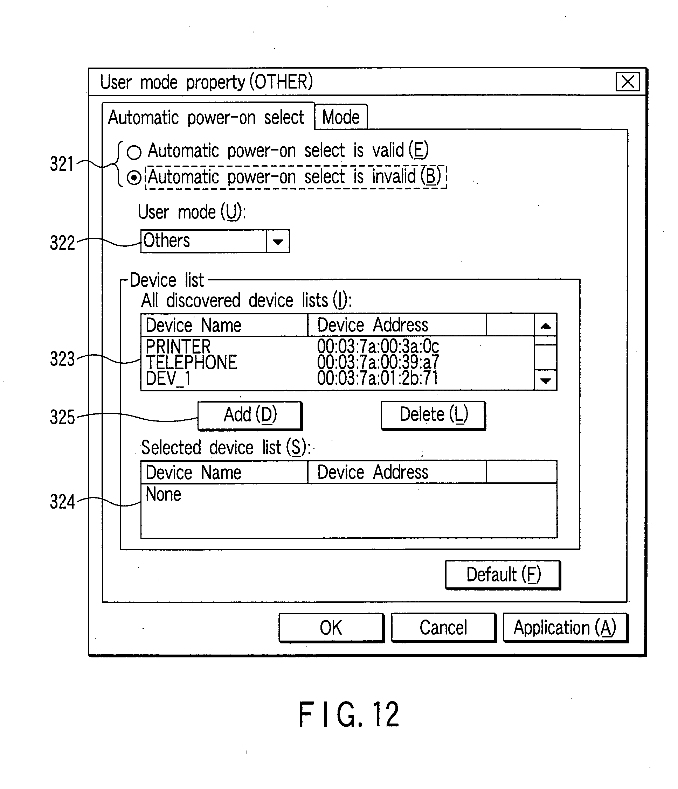

FIG. 12 shows an example of the "automatic power-on select" property sheet.

The "automatic power-on select" is a function of automatically selecting a user mode that conforms to the remote device discovered through the device discovery process performed by the wireless communication device 101. The "automatic power-on select" property sheet includes a radio button 321 for designating validity/invalidity of the "automatic power-on select" function. A user can depress the radio button 321 to designate the validity or invalidity of the "automatic power-on select" function.

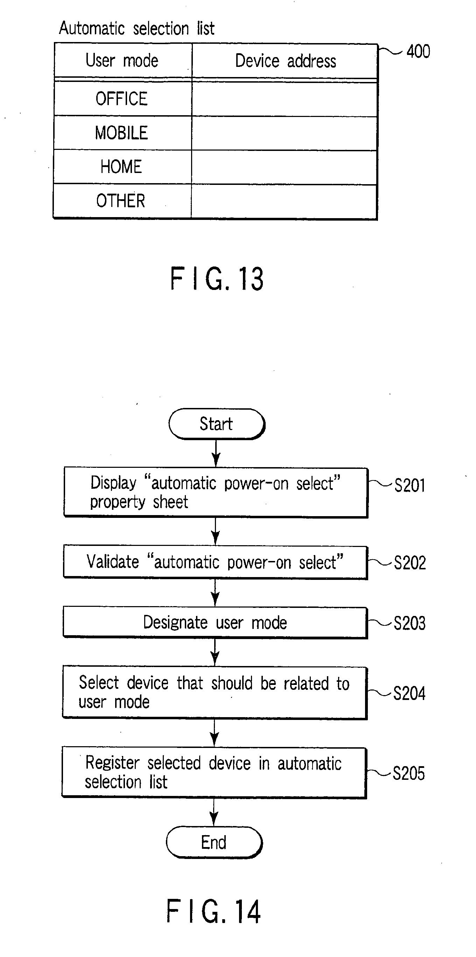

In the "automatic power-on select" function, an automatic selection list is used to determine which remote device is associated with which user mode of the computer 1. FIG. 13 shows an example of the automatic selection list.

The automatic selection list 400 contains link information that defines a relationship between a remote device and a user mode. As shown in FIG. 13, in the automatic selection list 400, a list of device addresses of remote devices associated with their respective user modes is managed. A plurality of device addresses can be held for each of the user modes.

As shown in FIG. 12, the "automatic power-on select" property sheet includes a user mode designating pull-down menu 322 and two device list views 323 and 324 as interfaces to cause a user to make an automatic selection list 400.

The pull-down menu 322 is used to designate a user mode that is to be associated with the remote device. The device list view 323 displays a list of all the remote devices that have already been discovered. The device list view 324 displays a list of remote devices that are associated with the user mode designated by the pull-down menu 322, based on the automatic selection list 400.

The user can select an arbitrary remote device from the device list view 323 and depress an "additional" button 325 to register the selected remote device in the automatic selection list 400. The selected remote device is registered in the automatic selection list 400 while being associated with the user mode that is currently selected by the pull-down menu 322.

FIG. 14 is a flowchart showing a process of registering a remote device in the automatic selection list 400.

The registering process include a step of displaying the "automatic power-on select" property sheet (step S201), a step of validating the "automatic power-on select" function (step 5202), a step of designating a user mode (step S203), a step of selecting a remote device (step S204), and a step of registering the selected remote device in the automatic selection list 400 (step S205). These steps are executed in accordance with the operation of a user.

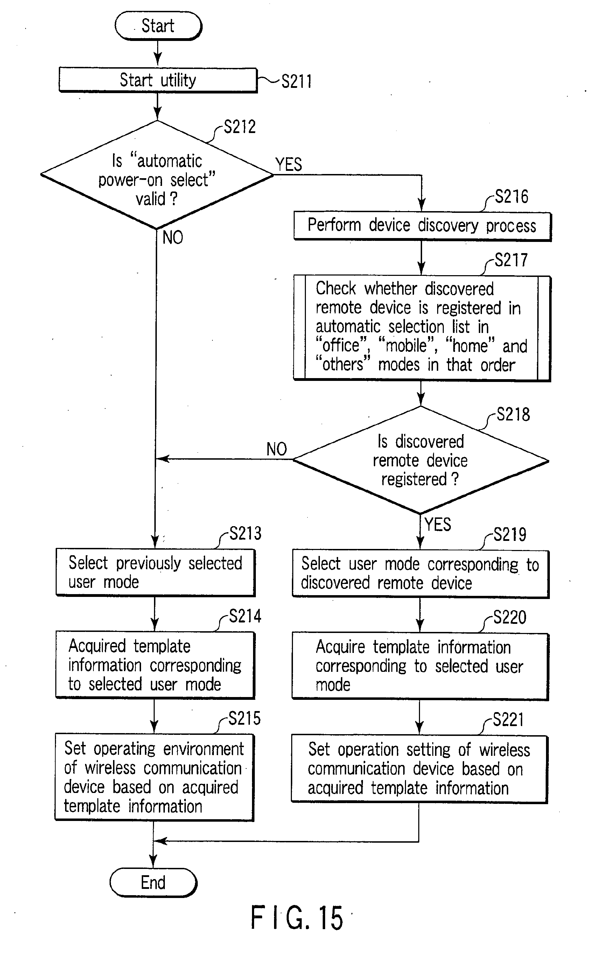

A process of automatically selecting a user mode will now be described with reference to the flowchart shown in FIG. 15.

When the wireless communication control utility 201 is activated (step S211), it first determines whether the "automatic power-on select" function is valid or not (step S212).

If the "automatic power-on select" function is invalid (NO in step S212), the wireless communication control utility 201 selects the previously selected user mode, i.e., the user mode selected at the time of completion of the utility 201 (step S213). The utility 201 acquires template information corresponding to the selected user mode from the office template information 211, mobile template information 212, home template information 213 and others template information 214 (step S214). Then, the utility 201 sets the setting values of the operating environment setting items described in the acquired template information in the wireless communication device 101 through the protocol stack driver 204 (step S215). The wireless communication device 101 is therefore set at a security level corresponding to the selected user mode.

After that, if a user selects another user mode on the user mode bar 102, the wireless communication control utility 201 performs the foregoing mode switching process shown in FIG. 9.

If the "automatic power-on select" function is valid (YES in step S212), the wireless communication control utility 201 performs a device discovery process for discovering a remote device that is present in the wireless communication area of the wireless communication device 101 (step S216). In this device discovery process, the wireless communication device 101 broadcasts a device discovery request. After that, the wireless communication control utility 201 selects a user mode that is associated with the discovered remote device based on both the results of the device discovery process and the contents of the above-described automatic selection list 400.

More specifically, the wireless communication control utility 201 first checks whether the device address of the discovered remote device is registered in the automatic selection list 400 in the "office" mode, "mobile" mode, "home" mode and "others" mode in that order (step S217). The check process in step S217 is performed in order from the first discovered remote device.

When the device address of the discovered remote device is registered in the automatic selection list 400 or when the device address of the discovered remote device and the device address registered in the automatic selection list 400 coincide with each other (YES in step S218), the wireless communication control utility 201 selects a user mode corresponding to the discovered remote device (step S219).

The wireless communication control utility 201 acquires template information corresponding to the selected user mode from the office template information 211, mobile template information 212, home template information 213 and others template information 214 (step S220). Then, the utility 201 sets the setting values of the operating environment setting items described in the acquired template information in the wireless communication device 101 through the protocol stack driver 204 (step S221). Thus, the wireless communication device 101 is automatically set at a security level that is suitable for connection to the discovered remote device.

For example, a modem device used in an office is registered in the automatic selection list 400 as a remote device that is associated with the "office" mode. A user starts the wireless communication control utility 201 in the office. The wireless communication device 101 performs a device discovery process and accordingly the modem device is discovered. Since the modem device is a remote device that is associated with the "office" mode, the user mode of the wireless communication device 101 is automatically set in the "Office" mode. Thus, the user can automatically select a user mode that conforms to a surrounding remote device for communication without any consciousness of the setting of the user mode.

If none of the discovered remote devices are registered in the automatic selection list 400 (NO in step S218), the wireless communication control utility 201 selects the previously selected user mode or the user mode selected at the time of completion of the utility 201 (step S213). The utility 201 acquires template information corresponding to the selected user mode from the office template information 211, mobile template information 212, home template information 213 and others template information 214 (step S214). Then, the utility 201 sets the set values of the operating environment setting items described in the acquired template information in the wireless communication device 101 through the protocol stack driver 204 (step S215).

As described above, according to the present embodiment, the setting of an operating environment for the security level of wireless communication is automatically changed. In particular, it is possible to change the setting as to whether a local device responds to a device discovery request from a remote device in accordance with a location for wireless communication. Consequently, the security level can easily be changed. For example, a local device can be discovered by a surrounding remote device in an office and at home, and hidden therefrom in the mobile environment such as streets, trains, stations and airports.

The above-described embodiment is directed to a wireless communication device included in a computer. However, the present invention can be applied to a wireless communication device that is freely detachable from a computer, such as a wireless communication card. Furthermore, the present invention is not limited to a computer but can be applied to a PDA, a cellular phone and the like.

## Claims

1. An apparatus for performing a wireless communication by using a wireless communication device (101), **characterized by** comprising:
means (201, S102) for selecting one from among a plurality of locations that are predetermined to perform the wireless communication; and
means (201, S104) for setting an operating environment for the wireless communication in a mode in which the wireless communication device (101) does not respond to a device discovery request transmitted from a remote device, based on the selected location.

2. The apparatus according to claim 1, **characterized by** further comprising means for holding a plurality of mode setting information items (211, 212, 213, 214) each including information indicating whether the wireless communication device (101) should respond to the device discovery request, the plurality of mode setting information items (211, 212, 213, 214) corresponding to the plurality of locations,
wherein the means (201, S104) for setting the operating environment includes means for setting the operating environment for the wireless communication in one of a mode in which the wireless communication device (101) responds to the device discovery request and a mode in which the wireless communication device (101) does not respond to the device discovery request, based on mode setting information item corresponding to the selected location.

3. The apparatus according to claim 2, **characterized in that** the plurality of mode setting information items (211, 212, 213, 214) each include information indicating whether the wireless communication device (101) should respond to a connection request transmitted from a remote device, and the means (201, S104) for setting the operating environment further includes means for setting the operating environment for the wireless communication in one of a mode in which the wireless communication device (101) responds to the connection request and a mode in which the wireless communication device (101) does not respond to the connection request, based on mode setting information item corresponding to the selected location.

4. The apparatus according to claim 2, **characterized in that** the plurality of mode setting information items (211, 212, 213, 214) each include information indicating whether it is necessary to authenticate that the wireless communication device (101) and the remote device have a same password, and the means (201, S104) for setting the operating environment further includes means for setting the operating environment for the wireless communication in one of a mode in which the authentication need to be performed and a mode in which the authentication need not to be performed, based on mode setting information item corresponding to the selected location.

5. The apparatus according to claim 1, **characterized in that** the means (201, S102) for selecting one from among the plurality of locations includes means for displaying on a display screen a selection screen (102) for causing a user to select one from among the locations.

6. The apparatus according to claim 1, **characterized in that** the means (201, S102) for selecting one from among the plurality of locations includes means (S203, S204, S205) for defining link information for associating each of remote devices with one of the locations, means (S216) for performing a device discovery process of discovering a remote device that is present within a wireless communication area of the wireless communication device (101), and means (S219) for selecting one from among the locations based on a result of the device discovery process and the link information so as to select a location that is associated with the remote device discovered by the device discovery process.

7. A method of controlling an operating environment for wireless communication with a remote device, the method being applied to an apparatus for performing the wireless communication, the method **characterized by** comprising:
selecting (201, S102) one from among a plurality of locations which are predetermined to perform the wireless communication; and
setting (S201, S104) the operating environment for the wireless communication in a mode in which the apparatus does not respond to a device discovery request transmitted from the remote device, based on the selected location.

8. The method according to claim 7, **characterized in that** the setting (201, S104) includes setting the operating environment for the wireless communication in one of a mode in which the apparatus responds to the device discovery request and a mode in which the apparatus does not respond to the device discovery request, based on one of a plurality of mode setting information items (211, 212, 213, 214) which corresponds to the selected location, the plurality of mode setting information items (211, 212, 213, 214) corresponding to the plurality of locations.

9. The method according to claim 8, **characterized in that** the plurality of mode setting information items (211, 212, 213, 214) each include information indicating whether the apparatus should respond to a connection request transmitted from a remote device, and the setting (201, S104) further includes setting the operating environment for the wireless communication in one of a mode in which the apparatus responds to the connection request and a mode in which the apparatus does not respond to the connection request, based on mode setting information item corresponding to the selected location.

10. The method according to claim 8, **characterized in that** the plurality of mode setting information items (211, 212, 213, 214) each include information indicating whether it is necessary to authenticate that the apparatus and the remote device have a same password, and the setting (201, S104) further includes setting the operating environment for the wireless communication in one of a mode in which the authentication need to be performed and a mode in which the authentication need not to be performed, based on mode setting information items corresponding to the selected location.

11. The method according to claim 7, **characterized in that** the selecting (201, S102) includes displaying on a display screen a selection screen (102) for causing a user to select one from among the locations.

12. The method according to claim 7, **characterized in that** the selecting (201, S102) includes defining (S203, S204, S205) link information for associating each of remote devices with one of the locations (S203, S204, S205), performing (S216) a device discovery process of discovering a remote device that is present within a wireless communication area of the apparatus, and selecting (S219) one from among the locations based on a result of the device discovery process and the link information so as to select a location that is associated with the remote device discovered by the device discovery process.
